# EUROPÄISCHE PATENTSCHRIFT

(11) **EP 3 043 948 B1**
(45) Veröffentlichungstag und Bekanntmachung des Hinweises auf die Patenterteilung: **19.06.2019**
(21) Anmeldenummer: 14752620.6
(22) Anmeldetag: 15.08.2014
(51) Int. Cl.: B23K 9/173, B60G 21/055, B23K 9/235, B23K 9/02, B23K 9/028

(54) **VERFAHREN ZUM HERSTELLEN EINES STABILISATORS EINES KRAFTFAHRZEUGS**
METHOD FOR PRODUCING A STABILIZER FOR A MOTOR VEHICLE
PROCÉDÉ DE FABRICATION D'UN STABILISATEUR DE VÉHICULE AUTOMOBILE

(30) Priorität: 13.09.2013 DE 102013218413
(43) Veröffentlichungstag der Anmeldung: 20.07.2016
(73) Patentinhaber: ZF Friedrichshafen AG, 88046 Friedrichshafen (DE)
(72) Erfinder: SCHEPER, Frank, 49624 Loeningen (DE); HOLTZ, Stefan, 49448 Huede (DE); WANG, Xiaocen, 49448 Lemförde (DE)
(86) Internationale Anmeldenummer: PCT/EP2014/067472
(87) Internationale Veröffentlichungsnummer: WO 2015/036200

(56) Entgegenhaltungen:
- EP-A1- 1 712 379
- DE-A1- 19 758 292
- JP-A- S53 140 245
- JP-A- 2001 219 275
- JP-A- 2008 142 768
- US-A1- 2011 198 820

## Beschreibung

Die Erfindung betrifft ein Verfahren zum Herstellen eines Stabilisators eines Kraftfahrzeugs (siehe z.B. JP 2001 219275 A).

Der grundsätzliche Aufbau sowie die grundsätzliche Funktionsweise eines Stabilisators eines Kraftfahrzeugs ist aus der Praxis bekannt. So dient ein Stabilisator der Verbesserung der Straßenlage. Ein Stabilisator verfügt über eine Torsionsstange sowie über an beiden Seiten der Torsionsstange angreifende Längslenker, wobei die Torsionsstange an einer Karosserie eines Kraftfahrzeugs angreift, und wobei die Längslenker an den Radaufhängungen angreifen. Die Torsionsstange des Stabilisators wird auch als Stabilisatorrohr und die Längslenker des Stabilisators werden auch als Stabilisatorschwerter bezeichnet. Aus der Praxis ist es bereits bekannt, die Längslenker bzw. Stabilisatorschwerter mit der Torsionsstange bzw. dem Stabilisatorrohr zu verschweißen. Hierzu wird bei aus der Praxis bekannten Stabilisatoren so vorgegangen, dass die aus einem Federstahl gefertigten Längslenker mit der ebenfalls aus einem Federstahl gefertigten Torsionsstange zunächst verschweißt werden, wobei anschließend die verschweißte Einheit aus den Längslenkern und der Torsionsstange in einem Härteofen vergütet wird. Dann, wenn der Stabilisator nach dem Verschweißen der Längslenker sowie der Torsionsstange als Einheit vergütet wird, sind relativ große Härteöfen erforderlich. Dies ist von Nachteil.

Hiervon ausgehend liegt der vorliegenden Erfindung die Aufgabe zu Grunde, ein neuartiges Verfahren zum Herstellen eines Stabilisators eines Kraftfahrzeugs zu schaffen.

Diese Aufgabe wird durch ein Verfahren gemäß Patentanspruch 1 gelöst. Erfindungsgemäß werden die beiden Längslenker und die Torsionsstange vor dem Verschweißen vergütet und demnach nach dem Vergüten verschweißt, wobei jeder Längslenker an einem Ende beidseitig über jeweils eine mehrlagige Schweißnaht mit der Torsionsstange verschweißt wird, und wobei jede Schweißnaht derart nicht-gleichschenklig ausgeführt wird, dass die jeweilige Schweißnaht angrenzend zur Torsionsstange kürzer ist als angrenzend zum jeweiligen Längslenker.

Mit der Erfindung wird vorgeschlagen, die Längslenker sowie die Torsionsstange eines Stabilisators vor dem Verschweißen zu vergüten, sodass demnach die Längslenker und die Torsionsstange erst nach dem Vergüten verschweißt werden. Jeder vorab vergütete Längslenker wird dabei an einem Ende beidseitig über jeweils eine mehrlagige Schweißnaht mit der vorab vergüteten Torsionsstange verschweißt, wobei jede Schweißnaht nicht-gleichschenklig ausgeführt ist. So verfügt jede Schweißnaht angrenzend zur Torsionsstange über eine geringere Länge als angrenzend zum jeweiligen Längslenker, sodass demnach die jeweilige Schweißnaht angrenzend zur Torsionsstange kürzer ist als angrenzend zum jeweiligen Längslenker.

Mit der Erfindung ist es möglich, zur Ausbildung eines Stabilisators vorab vergütete Längslenker bzw. Stabilisatorschwerter mit einer vorab vergüteten Torsionsstange bzw. einem vorab vergüteten Stabilisatorrohr zu verschweißen, und zwar unter Bereitstellung eines Stabilisators mit gewünschter Betriebsfestigkeit. Bedingt dadurch, dass die Schweißnähte nicht-gleichschenklig ausgeführt sind, ist es möglich, geometrische Kerben der Schweißnähte und innere Werkstoffkerben der Schweißnähte zu entkoppeln und in Bereiche geringer Beanspruchung zu verschieben. Hierdurch kann die gewünschte Betriebsfestigkeit und eine hohe Lebensdauer des hergestellten Stabilisators gewährleistet werden.

Vorzugsweise wird jede Schweißnaht derart nicht-gleichschenklig ausgeführt, dass ein Verhältnis X=I/L zwischen der Länge I der jeweiligen Schweißnaht angrenzend zur Torsionsstange und der Länge L der jeweiligen Schweißnaht angrenzend zum jeweiligen Längslenker zwischen 0,36 und 0,8, insbesondere zwischen 0,5 und 0,8, vorzugsweise zwischen 0,6 und 0,7 beträgt. Dies ist besonders bevorzugt, um geometrische Kerben und innere Werkstoffkerben der Schweißnaht zu entkoppeln.

Nach einer vorteilhaften Weiterbildung wird jede Schweißnaht mindestens dreilagig ausgeführt, nämlich aus einer Wurzellage, mindestens einer Zwischenlage und einer Decklage, wobei die Wurzellage, die oder jede Zwischenlage und die Decklage mit Hilfe von Metallaktivgasschweißen über individuelle Schweißparameter derart ausgeführt werden, dass die resultierende Schweißnaht sowohl im Schweißgutbereich als auch im Wärmeeinflusszonenbereich jeweils eine Härte zwischen 200 und 300 HV1 aufweist.

Das mehrlagige Ausführen der Schweißnähte über Metallaktivgasschweißen unter Verwendung individueller Schweißparameter für die einzelnen Lagen der Schweißnähte ist besonders bevorzugt, um die geometrische Kerben und innere Werkstoffkerben zu entkoppeln und einen Stabilisatorlenker mit der gewünschten Betriebsfestigkeit bereitzustellen.

Vorzugsweise wird für die Wurzellage ein Schweißbrenner mit einem Schweißstrom zwischen 240 und 340 A und einer Schweißspannung zwischen 29 und 33 V betrieben, wobei die zu verschweißenden Bauteile relativ zum feststehenden Schweißbrenner mit einer Geschwindigkeit zwischen 0,30 und 0,50 m/min bewegt werden. Für die oder jede Zwischenlage wird der Schweißbrenner mit einem Schweißstrom zwischen 230 und 340 A und einer Schweißspannung zwischen 28 und 31 V betrieben wird, wobei die zu verschweißenden Bauteile relativ zum Schweißbrenner mit einer Geschwindigkeit zwischen 0,25 und 0,40 m/min bewegt werden, und wobei der Schweißbrenner senkrecht hierzu eine Pendelbewegung mit einer relativ kleiner Amplitude ausführt. Für die Decklage wird der Schweißbrenner mit einem Schweißstrom zwischen 210 und 315 A und einer Schweißspannung zwischen 27 und 31 V betrieben, wobei die zu verschweißenden Bauteile relativ zum Schweißbrenner mit einer Geschwindigkeit zwischen 0,20 und 0,55 m/min bewegt werden, und wobei der Schweißbrenner senkrecht hierzu eine Pendelbewegung mit einer relativ großen Amplitude ausführt. Die obigen Schweißparameter für das Metallaktivgasschweißen der einzelnen Lagen der Schweißnähte ist besonders bevorzugt.

Vorzugsweise werden die Längslenker und die Torsionsstange unmittelbar vor dem Verschweißen auf eine Temperatur zwischen 120 und 150 °C vorgewärmt, wobei nach dem Verschweißen die Längslenker und die Torsionsstange einem Verfestigungsstrahlen unterzogen werden. Über das Vorwärmen der zu verschweißenden Baugruppe kann die Betriebsfestigkeit weiter gesteigert werden. Ebenso kann durch das Verfestigungsstrahlen im Anschluss an das Schweißen die Betriebsfestigkeit des Stabilisators weiter gesteigert werden.

Vorzugsweise geht zumindest eine Decklage der jeweiligen Schweißnaht tangential in die Torsionsstange und vorzugsweise auch tangential in den jeweiligen Längslenker über.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine schematisierte Ansicht eines Stabilisators eines Kraftfahrzeugs; und
- Fig. 2: das Detail II der Fig. 1 des Stabilisators im Bereich einer zwischen einer Torsionsstange und einem Längslenker ausgebildeten Schweißnaht;
- Fig. 3: ein Detail II entsprechend Fig. 2 mit gerade ausgeführter Kontur der Schweißnaht;
- Fig. 4: ein weiteres Detail II entsprechend Fig. 2 mit elliptisch ausgeführter Kontur der Schweißnaht; und
- Fig. 5: ein weiteres Detail II entsprechend Fig. 2 mit elliptisch ausgeführter Kontur der Schweißnaht unter weitere Darstellung der Wärmeinflusszone, der geometrischen Kerben und der Werkstoffkerben.

Die hier vorliegende Erfindung betrifft ein Verfahren zum Herstellen eines Stabilisators.

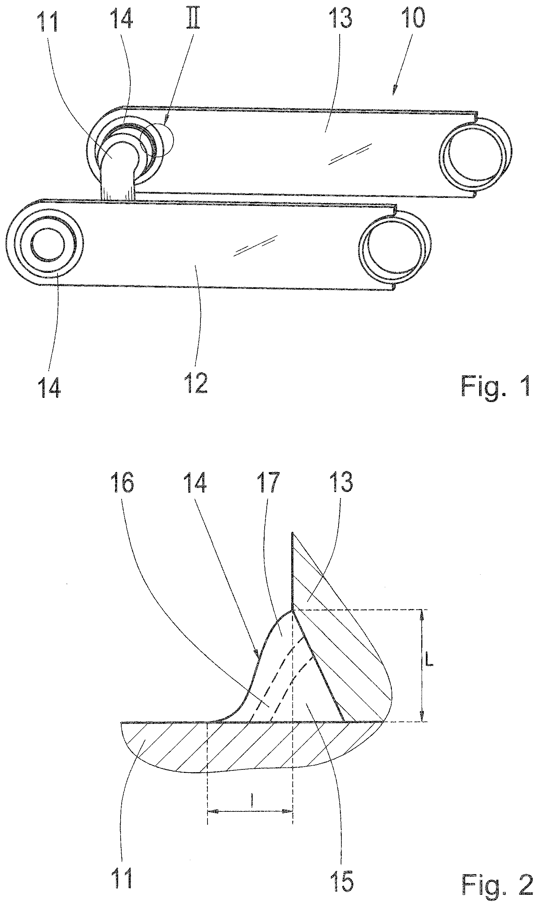

Fig. 1 zeigt stark schematisiert eine perspektivische Ansicht eines Stabilisators 10 eines Kraftfahrzeugs. Ein solcher Stabilisator 10 weist eine Torsionsstange 11 sowie Längslenker 12, 13 auf. Die Torsionsstange 11 wird auch als Stabilisatorrohr und die Längslenker 12, 13 werden auch als Stabilisatorschwerter bezeichnet.

An jedem Ende der Torsionsstange 11 greift jeweils ein Längslenker 12, 13 mit einem Ende an. Die Längslenker 12, 13 sind mit ihrem jeweiligen Ende am jeweiligen Ende der Torsionsstange 11 beidseitig unter Ausbildung von Schweißnähten 14 verschweißt.

In Fig. 1 sind lediglich zwei Schweißnähte 14 sichtbar, nämlich eine Schweißnaht im Bereich des Längslenkers 12 und eine Schweißnaht 14 im Bereich des Längslenkers 13.

An den in Fig. 1 nicht sichtbaren Seiten der beiden Längslenker 12, 13 sind ebenfalls derartige Schweißnähte 14 ausgebildet, sodass demnach zum Verschweißen der beiden Längslenker 12, 13 mit der Torsionsstange 11 insgesamt vier Schweißnähte 14 ausgebildet sind.

Die Schweißnähte 14 sind gemäß Fig. 1 kreisförmig ausgebildet und erstrecken sich demnach im Verbindungsbereich zwischen dem jeweiligen Längslenker 12, 13 und der Torsionsstange 11 kreisförmig um die Torsionsstange 11 herum.

Im Sinne der hier vorliegenden Erfindung wird vorgeschlagen, zum Herstellen eines solchen Stabilisators 10 zunächst eine vorab vergütete Torsionsstange 11 und vorab vergütete Längslenker 12, 13 bereitzustellen, die demnach vor dem Verschweißen vergütet wurden, sodass demnach das Verschweißen dieser Baugruppen erst nach dem Vergüten derselben erfolgt.

Jeder vorab vergütete Längslenker 12, 13 wird dabei an demjenigen Ende, an welchem er an der vorab vergüteten Torsionsstange 11 angreift, beidseitig über jeweils eine Schweißnaht 14 mit der Torsionsstange 11 verschweißt, wobei jede Schweißnaht 14 mehrlagig ausgebildet ist.

Jede Schweißnaht 14 ist darüber hinaus nicht-gleichschenklig ausgeführt, und zwar derart, dass die jeweilige Schweißnaht 14 angrenzend zur Torsionsstange 11 kürzer als angrenzend zum jeweiligen Längslenker 12 bzw. 13 ist.

Fig. 2 zeigt das Detail II des Stabilisators 10 der Fig. 1 im Bereich einer Schweißnaht 14, wobei Fig. 2 entnommen werden kann, dass die Schweißnaht 14 angrenzend zur Torsionsstange 11 eine Länge I und angrenzend zum jeweiligen Längslenker 13 eine Länge L aufweist. Das Ende des jeweiligen Längslenkers 12 bzw. 13 weist eine Fase auf. Die Scheißnaht 14 ist eine HV-Naht.

Da die Längslenker 12, 13 mit ihrem jeweiligen Ende am jeweiligen Ende der Torsionsstange 11 beidseitig unter Ausbildung einer Schweißnaht 14 verschweißt sind, ist an jedem Längslenker 12, 13 eine Doppel-HV-Naht ausgebildet.

Die jeweilige Fase des jeweiligen Längslenkers 12, 13 bleibt bei der Bestimmung der Länge I unberücksichtigt. Die Länge I der Schweißnaht 14 angrenzend zur Torsionsstange 11 wird demnach von der nicht angefasten Oberfläche des Längslenkers 12 bzw. 13 aus gemessen.

Die Länge I der Schweißnaht 14 angrenzend zur Torsionsstange 11 ist kürzer als die Länge L der Schweißnaht 14 angrenzend zum Längslenker 13, wobei ein Verhältnis X=I/L zwischen der Länge I der Schweißnaht 14 angrenzend zur Torsionsstange 11 und der Länge L der Schweißnaht 14 angrenzend zum Längslenker 13 zwischen 0,36 und 0,8 beträgt. Insbesondere beträgt dieses Verhältnis X=I/L zwischen 0,5 und 0,8. Vorzugsweise beträgt dieses Verhältnis X=I/L zwischen 0,6 und 0,7.

Eine derart nicht-gleichschenklige Ausführung der Schweißnähte 14 zwischen den Längslenkern 12, 13 und der Torsionsstange 11 ist bevorzugt, um nach dem Verschweißen der vorab vergüteten Längslenker 12, 13 mit der vorab vergüteten Torsionsstange 11 einen Stabilisator 10 mit ausreichend hoher Betriebsfestigkeit bereitzustellen. So kann durch die nicht-gleichschenklige Ausführung der Schweißnähte 14 eine geometrische Kerbe der jeweiligen Schweißnaht 14 von einer inneren Werkstoffkerbe der jeweiligen Schweißnaht 14 entkoppelt werden.

Bei den geometrischen Kerben einer Schweißnaht 14 handelt es sich um den jeweiligen Übergang der jeweiligen Schweißnaht 14 einerseits zum jeweiligen Längslenker 12, 13 und andererseits zur Torsionsstange 11.

Bei den inneren Werkstoffkerben der Schweißnähte 14 handelt es sich um Übergänge zwischen dem Grundwerkstoff der zu verschweißenden Baugruppen, dem sogenannten Schweißgutbereich der jeweiligen Schweißnaht 14 und der sich zwischen dem jeweiligen Schweißgutbereich und dem jeweiligen Grundwerkstoff der zu verbindenden Baugruppen ausbildenden Wärmeeinflusszonenbereiche.

Jede Schweißnaht 14 wird vorzugsweise mindestens dreilagig ausgeführt, wobei jede Schweißnaht 14 zumindest eine Wurzellage 15, mindestens eine Zwischenlage 16 und eine Decklage 17 aufweist. Besonders bevorzugt ist eine Ausgestaltung, in welcher jede Schweißnaht 14 dreilagig ausgeführt wird, wobei dann jede Schweißnaht 14 eine Wurzellage 15, eine Zwischenlage 16 und eine Decklage 17 umfasst.

Die Wurzellage 15, die oder jede Zwischenlage 16 sowie die Decklage 17 jeder Schweißnaht 14 werden mit Hilfe von Metallaktivgasschweißen (MAG-Schweißen) ausgeführt, wobei für jede der obigen drei unterschiedlichen Lagentypen individuelle Schweißparameter verwendet werden, um eine Schweißnaht 14 bereitzustellen, die sowohl im Schweißgutbereich als auch in den sogenannten Wärmeeinflusszonenbereichen jeweils eine Härte zwischen 200 und 300 HV1 aufweist. Hierbei handelt es sich um sogenannte Vickershärten.

Wie oben ausgeführt, werden bei dreilagigen Schweißnähten 14 die Wurzellage 15, die Zwischenlage 16 und die Decklage 17 jeweils über Metallaktivgasschweißen unter einer Schutzgasatmosphäre ausgeführt.

Für die Ausbildung der Wurzellage 15 wird dabei ein Schweißbrenner mit einem Schweißstrom zwischen 240 und 340 Ampere (A) und einer Schweißspannung zwischen 29 Volt und 33 Volt (V) betrieben, wobei die zu verschweißenden Bauteile, also der jeweilige mit der Torsionsstange 11 zu verschweißende Längslenker 12 bzw. 13, relativ zum feststehenden Schweißbrenner mit einer Geschwindigkeit zwischen 0,30 Meter pro Minute (m/min) und 0,50 m/min bewegt werden.

Bei der Ausbildung der Zwischenlage 16 der jeweiligen Schweißnaht 14 wird der Schweißbrenner mit einem Schweißstrom zwischen 230 A und 340 A und einer Schweißspannung zwischen 28 V und 31 V betrieben, wobei die zu verschweißenden Bauteile relativ zum Schweißbrenner mit einer Geschwindigkeit zwischen 0,25 m/min. und 0,40 m/min. bewegt werden, und wobei weiterhin der Schweißbrenner senkrecht zu dieser Fortbewegungsrichtung eine Pendelbewegung mit einer relativ kleinen Amplitude ausführt.

Zur Ausbildung der Decklage 17 einer jeden Schweißnaht 14 wird der Schweißbrenner mit einem Schweißstrom zwischen 210 A und 315 A und einer Schweißspannung zwischen 27 V und 31 V betrieben, wobei die zu verschweißenden Bauteile mit einer Geschwindigkeit zwischen 0,20 m/min. und 0,55 m/min. relativ zum Schweißbrenner bewegt werden, und wobei der Schweißbrenner senkrecht zu dieser Relativbewegung eine Pendelbewegung mit einer relativ großen Amplitude ausführt.

Zwischen dem Schweißen der Wurzellage 15 und dem Schweißen der Zwischenlage 16 sowie zwischen dem Schweißen der Zwischenlage 16 und dem Schweißen der Decklage 17 einer jeden Schweißnaht 14 wird jeweils eine Schweißpause eingelegt, die vorzugsweise zwischen 20 Sekunden und 120 Sekunden beträgt.

Das Verschweißen der Längslenker 12, 13 mit der Torsionsstange 11 erfolgt typischerweise zeitlich nacheinander, sodass demnach zeitlich nacheinander vier Schweißnähte ausgebildet werden.

Vor dem Verschweißen werden die Torsionsstange 11 und die Längslenker 12, 13 auf eine Prozesstemperatur vorgewärmt, die vorzugsweise zwischen 120 °C und 150 °C beträgt.

Nach dem Verschweißen der obigen Baugruppen, also nach dem Verschweißen der beiden Längslenker 12, 13 mit der Torsionsstange 11, wird die verschweißte Einheit einem Verfestigungsstrahlen unterzogen, um negative Eigenspannungen zu eliminieren und Druckspannungen in den Stabilisator 10 einzubringen, welche die Lebensdauer desselben erhöhten. Das Verfestigungsstrahlen wird vorzugsweise über Kugelstrahlen ausgeführt.

Jede der Lagen 15, 16 und 17 der Schweißnaht 14 wird über eine Schweißraupe ausgebildet.

Bei der Torsionsstange 11 sowie bei den beiden Längslenkern 12, 13 des Stabilisators 10 handelt es sich typischerweise um Baugruppen aus einem Federstahl, so zum Beispiel aus Stahl der Typenbezeichnung 33 MnCrB5-2 + QT.

Wie bereits ausgeführt, werden die Torsionsstange 11 und die beiden Längslenker 12, 13 des Stabilisators 10, die aus einem solchen Federstahl gefertigt sind, vor dem Verschweißen derselben vergütet.

Das Verschweißen erfolgt, wie ebenfalls bereits ausgeführt, unter einer Schutzgasatmosphäre, wobei zum Schweißen vorzugsweise ein Schutzgas verwendet wird, welches eine definierte Mischung von Argon und Kohlendioxid umfasst. Vorzugsweise findet ein Schutzgas der Gasklasse M21 Verwendung.

Zum Schweißen wird ein Schweißzusatzwerkstoff verwendet, bei welchem es sich um eine Stahllegierung handelt, die zumindest Mangan, Nickel und Molybdän als Legierungsbestandteile umfasst.

Vorzugsweise wird ein drahtförmiger Schweißzusatzwerkstoff verwendet, nämlich ein Schweißzusatzwerkstoff der Typenbezeichnung G69 6 M Mn4Ni1,5CrMo.

Obwohl die Verwendung eines solchen Schweißzusatzwerkstoffs zum Verschweißen der Längslenker 12, 13 mit der Torsionsstange 11 aus dem oben beschriebenen Federstahl bevorzugt ist, sei an dieser Stelle darauf hingewiesen, dass auch ein anderer Schweißzusatzwerkstoff verwendet werden kann. Ebenso kann ein anderes Schutzgas zum Schweißen verwendet werden.

Erfindungsgemäß erfolgt demnach das Verschweißen vorab vergüteter Längslenker 12, 13 mit einer vorab vergüteten Torsionsstange 11 zur Ausbildung eines Stabilisators 10 eines Kraftfahrzeugs unter Verwendung mehrlagiger, nichtgleichsschenkliger Schweißnähte 14. Ferner werden zum Verschweißen vorzugsweise für jede Lage 15, 16, 17 definierte, lagenindividuelle Schweißparameter verwendet. Hierdurch ist es möglich, innerhalb der Schweißnähte 14 Werkstoffkerben und geometrische Kerben zu entkoppeln.

Werkstoffkerben können in den Bereich geringer Beanspruchung verlegt werden. Es kann ein homogener Härteverlauf eingestellt werden, wodurch sich ein duktileres Materialverhalten im Bereich der geometrischen Kerben der Schweißnähte 14 und somit ein verbessertes Rissfortschrittverhalten einstellen lässt.

Wie bereits ausgeführt, betrifft die Erfindung das Verfahren zum Herstellen des Stabilisators 10. Der Stabilisator 10 umfasst die Torsionsstange 11 sowie die Längslenker 12, 13, die jeweils an einem Ende beidseitig über mehrlagige Schweißnähte 14 mit der Torsionsstange 11 verschweißt sind. Jede Schweißnaht 14 ist nicht-gleichschenklig ausgeführt und verfügt über mindestens drei Lagen, nämlich die innere Wurzellage 15, die äußere Decklage 17 und mindestens eine zwischen der inneren Wurzellage 15 und der äußeren Decklage 17 positionierte Zwischenlage 16. Jede der Lagen 15, 16, 17 wird vorzugsweise über eine Schweißraupe gebildet.

Die Schweißnähte 14 weisen in Fig. 2 eine im Querschnitt S-förmig kontierte Oberfläche im Bereich der Decklage 17 auf, die tangential in eine Oberfläche der Torsionsstange 11 übergeht. Die Schweißnähte 14 sind kerbfrei.

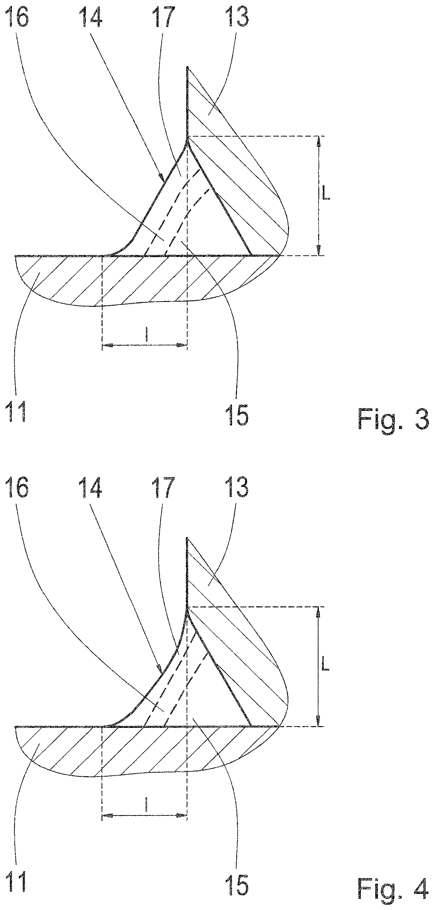

Fig. 3 und 4 zeigen analog zu Fig. 2 beispielhafte, alternative mögliche Konturen der Schweißnähte 14.

In Fig. 3 weisen die Schweißnähte 14 im Querschnitt im Bereich der Decklage 17 eine gerade konturierte Oberfläche auf, die vorzugsweise jeweils tangential in die Oberfläche der Torsionsstange 11 und in die Oberfläche des jeweiligen Längslenkers 12, 13 übergehen.

In Fig. 4 weisen die Schweißnähte 14 im Querschnitt im Bereich der Decklage 17 eine elliptisch konturierte Oberfläche auf, die ebenfalls vorzugsweise jeweils tangential in die Oberfläche der Torsionsstange 11 und in die Oberfläche des jeweiligen Längslenkers 12, 13 übergehen.

Der tangentiale Übergang zumindest der Decklage 17 der Schweißnaht in die Oberfläche der Torsionsstange 11 und in die Oberfläche des jeweiligen Längslenkers 12, 13 ist zur Reduzierung der Wirkung geometrischer Kerben bevorzugt.

Jede Schweißnaht 14 ist vorzugsweise derart nicht-gleichschenklig ausgeführt, dass das Verhältnis X=I/L zwischen der Länge I der Schweißnaht 14 angrenzend zur Torsionsstange 11 und der Länge L der Schweißnaht 14 angrenzend zum Längslenker 12, 13 zwischen 0,36 und 0,8 beträgt.

Insbesondere beträgt dieses Verhältnis X=I/L zwischen 0,5 und 0,8.

Vorzugsweise beträgt dieses Verhältnis X=I/L zwischen 0,6 und 0,7.

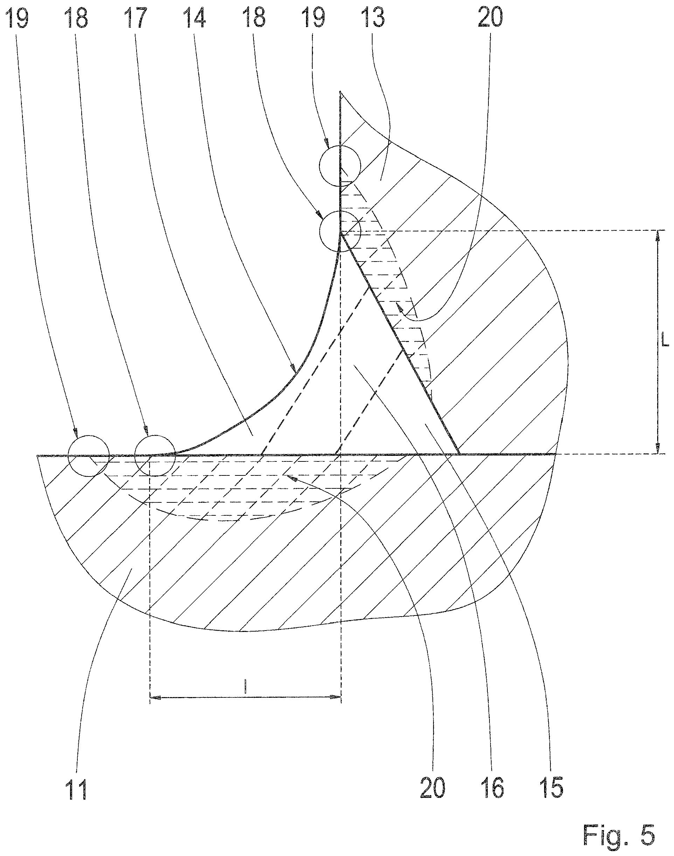

Wie bereits ausgeführt, ist es mit der Erfindung möglich, geometrische Kerben der Schweißnähte 14 und innere Werkstoffkerben der Schweißnähte 14 zu entkoppeln und in Bereiche geringer Beanspruchung zu verschieben. Bei den geometrischen Kerben einer Schweißnaht 14 handelt es sich um den jeweiligen Übergang der jeweiligen Schweißnaht 14 einerseits zum jeweiligen Längslenker 12, 13 und andererseits zur Torsionsstange 11. In Fig. 5 sind Bereiche geometrischen Kerben 18 eingezeichnet. Bei den inneren Werkstoffkerben 19 der Schweißnähte 14, die in Fig. 5 ebenfalls eingezeichnet sind, handelt es sich um Übergänge zwischen dem Grundwerkstoff der zu verschweißenden Baugruppen, dem sogenannten Schweißgutbereich der jeweiligen Schweißnaht 14, und der sich zwischen dem jeweiligen Schweißgutbereich und dem jeweiligen Grundwerkstoff der zu verbindenden Baugruppen ausbildenden Wärmeeinflusszonenbereiche 20. Fig. 5 kann entnommen werden, dass die geometrischen Kerben 18 und die inneren Werkstoffkerben 19 auseinander fallen. Es kann ein homogener Härteverlauf eingestellt werden, insbesondere im Bereich der geometrischen Kerben. Der inhomogene Härteanstieg zwischen dem Grundwerkstoff und der Wärmeeinflusszone wird in Bereiche geringerer Beanspruchung verschoben.

Die Härte der jeweiligen Schweißnaht 14 beträgt sowohl im Schweißgutbereich 16 als auch im sogenannten Wärmeeinflusszonenbereich 20, der zwischen dem Schweißgutbereich und dem Grundwerkstoff der miteinander verschweißten Baugruppen 11, 13 bzw. 11, 12 ausgebildet ist, zwischen 200 HV1 und 300 HV1.

### Bezugszeichen

- 10: Stabilisator
- 11: Torsionsstange
- 12: Längslenker
- 13: Längslenker
- 14: Schweißnaht
- 15: Wurzellage
- 16: Zwischenlage
- 17: Decklage
- 18: geometrische Kerbe
- 19: Werkstoffkerbe
- 20: Wärmeeinflusszonenbereich

## Patentansprüche

1. Verfahren zum Herstellen eines Stabilisators (10) eines Kraftfahrzeugs, wobei der Stabilisator eine Torsionsstange (11) und Längslenker (12, 13) aufweist, wobei die Längslenker (12, 13) mit der Torsionsstange (11) jeweils durch Schweißen verbunden werden, wobei jeder Längslenker (12, 13) an einem Ende beidseitig über jeweils eine mehrlagige Schweißnaht (14) mit der Torsionsstange (11) verschweißt wird, und wobei jede Schweißnaht (14) derart nicht-gleichschenklig ausgeführt wird, dass die jeweilige Schweißnaht (14) angrenzend zur Torsionsstange (11) kürzer ist als angrenzend zum jeweiligen Längslenker (12, 13), **dadurch gekennzeichnet, dass** die Längslenker (12, 13) und die Torsionsstange (11) vor dem Verschweißen vergütet und demnach nach dem Vergüten verschweißt werden.

2. Verfahren nach Anspruch 1, **dadurch gekennzeichnet, dass** jede Schweißnaht (14) derart nicht-gleichschenklig ausgeführt wird, dass ein Verhältnis X=I/L zwischen der Länge I der jeweiligen Schweißnaht (14) angrenzend zur Torsionsstange (11) und der Länge L der jeweiligen Schweißnaht (14) angrenzend zum jeweiligen Längslenker (12, 13) zwischen 0,36 und 0,8 beträgt, wobei die Länge I der Schweißnaht 14 angrenzend zur Torsionsstange 11 von der nicht angefasten Oberfläche des Längslenkers 12 bzw. 13 aus gemessen wird.

3. Verfahren nach Anspruch 2, **dadurch gekennzeichnet, dass** das Verhältnis X=I/L zwischen der Länge I der jeweiligen Schweißnaht (14) angrenzend zur Torsionsstange (11) und der Länge L der jeweiligen Schweißnaht (14) angrenzend zum jeweiligen Längslenker (12, 13) zwischen 0,5 und 0,8 beträgt.

4. Verfahren nach Anspruch 3, **dadurch gekennzeichnet, dass** das Verhältnis X=I/L zwischen der Länge I der jeweiligen Schweißnaht (14) angrenzend zur Torsionsstange (11) und der Länge L der jeweiligen Schweißnaht (14) angrenzend zum jeweiligen Längslenker (12, 13) zwischen 0,6 und 0,7 beträgt.

5. Verfahren nach einem der Ansprüche 1 bis 4, **dadurch gekennzeichnet, dass** jede Schweißnaht (14) mindestens dreilagig ausgeführt wird, nämlich aus einer Wurzellage (15), mindestens einer Zwischenlage (16) und einer Decklage (17), wobei die Wurzellage (15), die oder jede Zwischenlage (16) und die Decklage (17) mit individuellen Schweißparametern ausgebildet werden.

6. Verfahren nach Anspruch 5, **dadurch gekennzeichnet, dass** für die Wurzellage (15) ein Schweißbrenner mit einem Schweißstrom zwischen 240 und 340 A und einer Schweißspannung zwischen 29 und 33 V betrieben wird, und dass die zu verschweißenden Bauteile relativ zum feststehenden Schweißbrenner mit einer Geschwindigkeit zwischen 0,30 und 0,50 m/min bewegt werden.

7. Verfahren nach Anspruch 5 oder 6, **dadurch gekennzeichnet, dass** zwischen dem Schweißen der einzelnen Lagen (15, 16, 17) jeweils eine Schweißpause zwischen 20 und 120 sec eingelegt wird.

8. Verfahren nach einem der Ansprüche 1 bis 7, **dadurch gekennzeichnet, dass** die Längslenker (12, 13) und die Torsionsstange (11) unmittelbar vor dem Verschweißen auf eine Temperatur zwischen 120 und 150 °C vorgewärmt werden.

9. Verfahren nach einem der Ansprüche 1 bis 8, **dadurch gekennzeichnet, dass** nach dem Verschweißen die Längslenker (12, 13) und die Torsionsstange (11) einem Verfestigungsstrahlen unterzogen werden.

10. Verfahren nach einem der Ansprüche 1 bis 9, **dadurch gekennzeichnet, dass** als Schweißzusatzwerkstoff eine zumindest Mangan, Nickel und Molybdän aufweisende Legierung verwendet wird.

## Claims

1. Method for producing an anti-roll bar (10) of a motor vehicle, the anti-roll bar having a torsion bar (11) and trailing arms (12, 13), the trailing arms (12, 13) being connected to the torsion bar (11) in each case by way of welding, each trailing arm (12, 13) being welded at one end on both sides to the torsion bar (11) via in each case one multiple-layer welded seam (14), and each welded seam (14) being of non-isosceles configuration in such a way that the respective welded seam (14) is shorter adjacently with respect to the torsion bar (11) than adjacently with respect to the respective trailing arm (12, 13), **characterized in that** the trailing arms (12, 13) and the torsion bar (11) are tempered before the welding and are accordingly welded after the tempering.

2. Method according to Claim 1, **characterized in that** each welded seam (14) is of non-isosceles configuration in such a way that a ratio X = 1/L between the length l of the respective welded seam (14) adjacently with respect to the torsion bar (11) and the length L of the respective welded seam (14) adjacently with respect to the respective trailing arm (12, 13) is between 0.36 and 0.8, the length l of the welded seam (14) adjacently with respect to the torsion bar (11) being measured from the non-chamfered surface of the trailing arm (12) or (13).

3. Method according to Claim 2, **characterized in that** the ratio X = l/L between the length l of the respective welded seam (14) adjacently with respect to the torsion bar (11) and the length L of the respective welded seam (14) adjacently with respect to the respective trailing arm (12, 13) is between 0.5 and 0.8.

4. Method according to Claim 3, **characterized in that** the ratio X = l/L between the length l of the respective welded seam (14) adjacently with respect to the torsion bar (11) and the length L of the respective welded seam (14) adjacently with respect to the respective trailing arm (12, 13) is between 0.6 and 0.7.

5. Method according to one of Claims 1 to 4, **characterized in that** each welded seam (14) is configured to be at least three layers, namely of a base layer (15), at least one intermediate layer (16) and a top layer (17), the base layer (15), the or each intermediate layer (16) and the top layer (17) being configured with individual welding parameters.

6. Method according to Claim 5, **characterized in that** a welding torch with a welding current between 240 and 340 A and a welding voltage between 29 and 33 V is operated for the base layer (15), and **in that** the components to be welded are moved relative to the stationary welding torch at a speed between 0.30 and 0.50 m/min.

7. Method according to Claim 5 or 6, **characterized in that** a welding pause between 20 and 120 seconds is taken in each case between the welding of the individual layers (15, 16, 17).

8. Method according to one of Claims 1 to 7, **characterized in that** the trailing arms (12, 13) and the torsion bar (11) are pre-heated to a temperature between 120 and 150°C immediately before the welding.

9. Method according to one of Claims 1 to 8, **characterized in that** the trailing arms (12, 13) and the torsion bar (11) are subjected to shot peening after the welding.

10. Method according to one of Claims 1 to 9, **characterized in that** an alloy which comprises at least manganese, nickel and molybdenum is used as a welding filler material.

## Revendications

1. Procédé de fabrication d'un stabilisateur (10) d'un véhicule automobile, dans lequel le stabilisateur présente une barre de torsion (11) et des bras oscillants longitudinaux (12, 13), dans lequel on assemble les bras oscillants longitudinaux (12, 13) respectivement à la barre de torsion (11) par soudage, dans lequel on soude chaque bras oscillant longitudinal (12, 13) à une extrémité sur les deux côtés chaque fois par un cordon de soudure à plusieurs couches (14) à la barre de torsion (11), et dans lequel on exécute chaque cordon de soudure (14) de façon non isocèle, de telle manière que le cordon de soudure respectif (14) soit plus court à proximité de la barre de torsion (11) qu'à proximité du bras oscillant longitudinal respectif (12, 13), **caractérisé en ce que** l'on traite les bras oscillants longitudinaux (12, 13) et la barre de torsion (11) par trempe et revenu avant le soudage et ensuite on les soude après le traitement par trempe et revenu.

2. Procédé selon la revendication 1, **caractérisé en ce que** l'on exécute chaque cordon de soudure (14) de façon non isocèle, de telle manière qu'un rapport X=l/L entre la longueur l du cordon de soudure respectif (14) à proximité de la barre de torsion (11) et la longueur L du cordon de soudure respectif (14) à proximité du bras oscillant longitudinal respectif (12, 13) soit compris entre 0,36 et 0,8, dans lequel on mesure la longueur l du cordon de soudure (14) à proximité de la barre de torsion (11) à partir de la surface non chanfreinée du bras oscillant longitudinal (12 ou 13).

3. Procédé selon la revendication 2, **caractérisé en ce que** le rapport X=l/L entre la longueur l du cordon de soudure respectif (14) à proximité de la barre de torsion (11) et la longueur L du cordon de soudure respectif (14) à proximité du bras oscillant longitudinal respectif (12, 13) vaut entre 0,5 et 0,8.

4. Procédé selon la revendication 3, **caractérisé en ce que** le rapport X=l/L entre la longueur l du cordon de soudure respectif (14) à proximité de la barre de torsion (11) et la longueur L du cordon de soudure respectif (14) à proximité du bras oscillant longitudinal respectif (12, 13) vaut entre 0,6 et 0,7.

5. Procédé selon l'une quelconque des revendications 1 à 4, **caractérisé en ce que** l'on exécute chaque cordon de soudure (14) en au moins trois couches, à savoir une couche de racine (15), au moins une couche intermédiaire (16) et une couche de recouvrement (17), dans lequel on réalise la couche de racine (15), la ou chaque couche intermédiaire (16) et la couche de recouvrement (17) avec des paramètres de soudage individuels.

6. Procédé selon la revendication 5, **caractérisé en ce que** l'on utilise pour la couche de racine (15) un brûleur de soudage avec un courant de soudage compris entre 240 et 340 A et une tension de soudage comprise entre 29 et 33 V, et **en ce que** l'on déplace les pièces à souder par rapport au brûleur de soudage fixe avec une vitesse comprise entre 0,30 et 0,50 m/min.

7. Procédé selon une revendication 5 ou 6, **caractérisé en ce que** l'on respecte entre le soudage des couches individuelles (15, 16, 17) chaque fois une pause de soudage comprise entre 20 et 120 s.

8. Procédé selon l'une quelconque des revendications 1 à 7, **caractérisé en ce que** l'on préchauffe les bras oscillants longitudinaux (12, 13) et la barre de torsion (11) à une température comprise entre 120 et 150°C immédiatement avant le soudage.

9. Procédé selon l'une quelconque des revendications 1 à 8, **caractérisé en ce que** l'on soumet après le soudage les bras oscillants longitudinaux (12, 13) et la barre de torsion (11) à un grenaillage d'écrouissage.

10. Procédé selon l'une quelconque des revendications 1 à 9, **caractérisé en ce que** l'on utilise comme matériau d'apport de soudage un alliage présentant au moins du manganèse, du nickel et du molybdène.
